# EUROPEAN PATENT APPLICATION

(11) **EP 4 629 686 A1**
(43) Date of publication of application: **08.10.2025**
(21) Application number: 22967128.4
(22) Date of filing: 29.11.2022
(51) Int. Cl.: H04W 16/26

(54) **PROVISION OF DYNAMIC COMMUNICATION CELL THAT RESPONDS TO INSUFFICIENCY IN COMMUNICATION QUALITY**

(71) Applicant: Rakuten Mobile, Inc., Tokyo 158-0094 (JP)
(72) Inventor: KITAGAWA, Koichiro, Tokyo 158-0094 (JP); AOYAGI, Kenichiro, Tokyo 158-0094 (JP)
(74) Representative: Betten & Resch
(86) International application number: PCT/JP2022/044041
(87) International publication number: WO 2024/116294

(57) **Abstract**

A communication control apparatus includes at least one processor to execute: identifying, by a communication device identifier, a communication device inside an existing communication cell; estimating, by a communication quality insufficiency estimator, an insufficient communication quality given by the existing communication cell to the communication device; and causing, by a dynamic communication cell provider, a dynamic communication station to provide a dynamic communication cell for the communication device inside the existing communication cell. The dynamic communication cell provider moves the dynamic communication station to a place at which the dynamic communication cell can be provided for the communication device to which an insufficient communication quality is estimated in response to such an estimation made by the communication quality insufficiency estimator.

## Description

### [TECHNICAL FIELD]

The present disclosure relates to provision of a dynamic communication cell in accordance with an insufficient communication quality.

### [BACKGROUND ART]

A number, types, uses of wireless communication devices (hereinafter also collectively referred to as "communication devices"), which are typified by smartphones and Internet of Things (IoT) devices, have been steadily increasing. Wireless communication standards have been steadily developed and improved. For example, commercial service of fifth-generation mobile communications systems known as "5G" began in 2018, and the development of 5G standards is still under way by the Third Generation Partnership Project (3GPP). Efforts have been started to develop standards for "6G" or sixth-generation mobile communications systems as the next-generation wireless communication standards following 5G.

### [Citation List]

### [Patent Literature]

[Patent Literature 1] JP 2010-278886 A

### [SUMMARY OF INVENTION]

### [TECHNICAL PROBLEM]

In conventional mobile communication networks, relatively large communication cells, such as terrestrial communication cells provided by terrestrial base stations installed permanently on the ground and non-terrestrial communication cells provided by non-terrestrial base stations such as communication satellites, have been primarily responsible for provision of communication service to communication devices. Unfortunately, there is a possibility that an insufficient communication quality to one or more communication devices may occur locally or temporarily in a portion of such a large communication cell.

In light of the situation, it is an object of the present disclosure to provide an apparatus such as a communication control apparatus capable of effectively making up for a local or temporal insufficient communication quality in an existing communication cell.

### [SOLUTION TO PROBLEM]

To solve the issue described above, a communication control apparatus according to an aspect of the present disclosure includes at least one processor to execute: identifying, by a communication device identifier, a communication device inside an existing communication cell; estimating, by a communication quality insufficiency estimator, an insufficient communication quality given by the existing communication cell to the communication device; and causing, by a dynamic communication cell provider, a dynamic communication station to provide a dynamic communication cell for the communication device inside the existing communication cell.

According to the aspect of the present disclosure, in accordance with an estimation of an insufficient communication quality to a communication device inside the existing communication cell, the dynamic communication station can provide the dynamic communication cell for the communication device. The dynamic communication cell here represents, for example, a communication cell that can change spatially or timewise. For instance, a moving communication station is an example of the dynamic communication station providing a dynamic communication cell that changes spatially (typically moves). A communication station switchable between an operation state and a suspension state is an example of the dynamic communication station providing a dynamic communication cell that changes timewise (typically switches between on and off).

Another aspect of the present disclosure is a communication control method. The method includes: identifying a communication device inside an existing communication cell; estimating an insufficient communication quality given by the existing communication cell to the communication device; and causing a dynamic communication station to provide a dynamic communication cell for the communication device inside the existing communication cell.

Another aspect of the present disclosure is a storage medium. The storage medium stores a communication control program to cause a computer to execute: identifying a communication device inside an existing communication cell; estimating an insufficient communication quality given by the existing communication cell to the communication device; and causing a dynamic communication station to provide a dynamic communication cell for the communication device inside the existing communication cell.

Any desired combinations of the above-described constituent elements and expressions of the elements converted into methods, devices, systems, recording media, computer programs, and other similar entities are still included in the present disclosure.

### [ADVANTAGEOUS EFFECTS OF INVENTION]

The technique according to the present disclosure can effectively make up for a local or temporal insufficient communication quality in an existing communication cell.

### [BRIEF DESCRIPTION OF DRAWINGS]

Fig. 1 schematically shows an overview of a wireless communication system to which a communication control apparatus is applied.
Fig. 2 schematically shows an overall configuration of a wireless communication system to which a communication control apparatus is applied.
Fig. 3 is a functional block diagram of a communication control apparatus.
Fig. 4 is an example of a flowchart showing communication control executed by a communication control apparatus.

### [DESCRIPTION OF EMBODIMENTS]

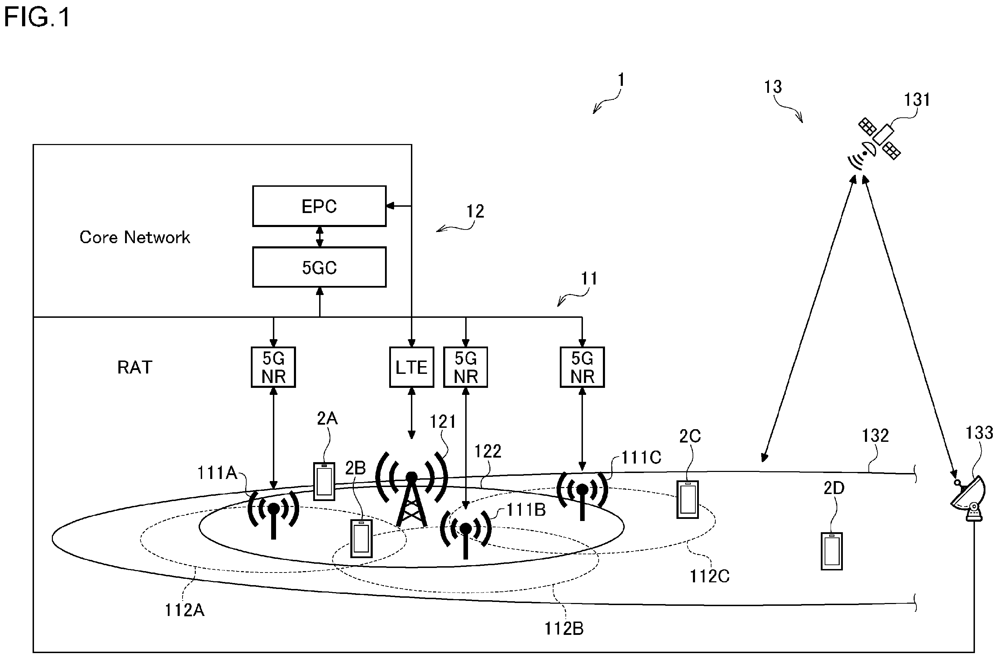

Fig. 1 schematically shows an overview of a wireless communication system 1 to which a communication control apparatus according to an embodiment of the present disclosure is applied. The wireless communication system 1 includes a 5G wireless communication system 11 conforming to fifth-generation mobile communications systems (5G), a 4G wireless communication system 12 conforming to fourthgeneration mobile communications systems (4G), and a satellite communication system 13 that provides satellite communication through a communication satellite 131. The 5G wireless communication system 11 uses New Radio (NR) or Fifth Generation New Radio (5G NR) as a radio access technology (RAT) and uses Fifth Generation Core (5GC) as a core network (CN), and the 4G wireless communication system 12 uses Longterm Evolution (LTE) or LTE-Advanced as a radio access technology and uses Evolved Packet Core (EPC) as a core network. The wireless communication system 1 may include a wireless communication system of the generation earlier than 4G, a wireless communication system of the generation (such as 6G) later than 5G, or Wi-Fi (registered trademark) or any wireless communication system that is not associated with any generation, although illustration thereof is omitted.

The 5G wireless communication system 11 includes a plurality of 5G base stations 111A, 111B, 111C (hereinafter also collectively referred to as a 5G base station 111) that are installed on the ground and that are designed to communicate with communication devices 2A, 2B, 2C, 2D (hereinafter also collectively referred to as a communication device 2) by 5G NR. The communication devices, for example, are smartphones, which are also referred to as user equipment (UE). In 5G, the base station 111 is also referred to as a gNodeB (gNB). Communication areas or support areas covered by the 5G base stations 111A, 111B, 111C are referred to as cells that are illustrated with 112A, 112B, 112C respectively (hereinafter also collectively referred to as a 5G cell 112).

The 5G cell 112 of each 5G base station 111 may have any size and typically has a diameter ranging from several meters to several tens of kilometers. Although there is no established definition, a cell that has a diameter ranging from several meters to 10 meters is sometimes referred to as a femtocell, a cell that has a diameter ranging from 10 meters to several tens of meters is referred to as a picocel, a cell that has a diameter ranging from several tens of meters to several hundred meters is referred to as a microcell, and a cell that has a diameter exceeding several hundred meters is referred to as a macrocell. In 5G, high-frequency radio waves such as millimeter waves are often used and because of height caused by the straightness of such radio waves, the radio waves are blocked by obstacles, resulting in a short communication coverage range. Hence, in 5G, cells smaller than those in 4G and earlier generations tend to be used.

The communication device 2 is designed to communicate through 5G, with proviso that the communication device is inside at least one of the plurality of the 5G cells 112A, 112B, 112C. In an example illustrated in the figure, the communication device 2B inside the 5G cells 112A and 112B can communicate with any of the 5G base stations 111A and 111B by 5G NR. The communication device 2C inside the 5G cell 112C can communicate with the 5G base station 111C by 5G NR. The communication devices 2A and 2D are outside all the 5G cells 112A, 112B, 112C and thus are in a state of not being able to communicate by 5G NR. The 5G communication between each communication device 2 and each 5G base station 111 through 5G NR is managed by the core network 5GC. For instance, 5GC is used to send and receive data to and from each 5G base station 111, send and receive data to and from an external network such as EPC, the satellite communication system 13, and the Internet, and manage mobility of the communication device 2.

The 4G wireless communication system 12 includes a plurality of 4G base stations 121 (only one of such stations is shown in Fig. 1) that are installed on the ground and that are designed to communicate with the communication device 2 by LTE or LTE-Advanced. In 4G, the base station 121 is also referred to as an eNodeB (eNB). In a similar way to each 5G base station 111, communication areas or support areas covered by the 4G base stations 121 are referred to as cells that are each illustrated with 122.

The communication device 2 is designed to communicate through 4G, with proviso that the communication device is inside the 4G cell 122. In the illustrated example, the communication devices 2A and 2B inside the 4G cell 122 can communicate with the 4G base station 121 by LTE or LTE-Advanced. The communication devices 2C and 2D are outside the 4G cell 122 and thus are in a state of not being able to communicate by LTE or LTE-Advanced. The 4G communication between each communication device 2 and each 4G base station 121 through LTE or LTE-Advanced is managed by the core network EPC. For instance, EPC is used to send and receive data to and from each 4G base station 121, send and receive data to and from an external network such as 5GC, the satellite communication system 13, and the Internet, and manage mobility of the communication device 2.

When attention is paid to the communication devices 2A, 2B, 2C, 2D, in the illustrated example, the communication device 2A is in a state of being able to communicate with the 4G base station 121 through 4G. The communication device 2B is in a state of being able to communicate with the 5G base stations 111A, 111B through 5G and with the 4G base station 121 through 4G, and the communication device 2C is in a state of being able to communicate with the 5G base station 111C through 5G. When a communication device, such as the communication device 2B, is allowed to communicate with a plurality of the base stations (111A, 111B, 121), one of the base stations that is assessed as the optimum choice from a point of view such as communication quality is selected to communicate with the communication device 2B under the management of the core network 5GC or EPC. The communication device 2D is not in a state of being able to communicate with any of the 5G base station 111 and the 4G base station 121 and thus communicates through the satellite communication system 13 described next.

The satellite communication system 13 is a wireless communication system that uses the communication satellite 131 as a non-terrestrial base station. The communication satellite is a low-earth-orbit satellite that flies in low earth orbit in outer space at an altitude of approximately 500 km to 700 km from the surface of the earth. In a similar way to the 5G base station 111 and the 4G base station 121, a communication area or a support area covered by the communication satellite 131 is referred to as a cell that is illustrated with 132. In such a way, the communication satellite 131 acting as a non-terrestrial base station provides the ground with a satellite communication cell 132 acting as a non-terrestrial communication cell. The communication device 2 on the ground is designed to communicate by satellite, with proviso that the communication device is inside the satellite communication cell 132. In a similar way to the 5G base station 111 in the 5G wireless communication system 11 and the 4G base station 121 in the 4G wireless communication system 12, the communication satellite 131 as a base station in the satellite communication system 13 can communicate by radio with the communication device 2 inside the satellite communication cell 132 either directly or indirectly through an aircraft and suchlike. The radio access technology that the communication satellite 131 uses for wireless communication with the communication device 2 inside the satellite communication cell 132 may be 5G NR shared with the 5G base station 111, either LTE or LTE-Advanced shared with the 4G base station 121, or any other radio access technology that can be used by the communication device 2. This eliminates the need for providing the communication device 2 with a special function or portion for satellite communication.

The satellite communication system 13 includes a gateway 133 as a ground station that is installed on the ground and that is designed to communicate with the communication satellite 131. The gateway 133 includes a satellite antenna to communicate with the communication satellite 131 and is connected to the 5G base station 111 and the 4G base station 121, which act as terrestrial base stations that make up a terrestrial network (TN). In such a way, the gateway 133 connects a non-terrestrial network (NTN) made up of the communication satellite 131, which acts as a non-terrestrial base station or a satellite base station, to the TN made up of the terrestrial base stations 111, 121 such that the NTN and the TN can communicate with each other. When the communication satellite 131 communicates with the communication device 2 inside the satellite communication cell 132 through 5G by 5G NR, 5GC connected through the gateway 133 and the 5G base station 111 (or a 5G radio access network) in the TN is used as a core network. When the communication satellite 131 communicates with the communication device 2 inside the satellite communication cell 132 through 4G by LTE or LTE-Advanced, EPC connected through the gateway 133 and the 4G base station 121 (or a 4G radio access network) in the TN is used as a core network. In such a way, different wireless communication systems, such as the 5G communication, 4G communication, and satellite communication systems, cooperate appropriately with one another through the gateway 133.

Satellite communication by means of the communication satellite 131 is primarily used to cover an area in which terrestrial base stations such as the 5G base station 111 and the 4G base station 121 cannot be provided or are barely provided. In the illustrated example, the communication device 2D outside the communication cells of all the terrestrial base stations communicates with the communication satellite 131. Meanwhile, the communication devices 2A, 2B, 2C in a state of being able to satisfactorily communicate with any of the terrestrial base stations are also inside the satellite communication cell 132 and thus can communicate with the communication satellite 131. However, the communication devices, as a general rule, communicate with the terrestrial base stations rather than the communication satellite 131 acting as a satellite base station and thereby save a limited communication resource (including electricity) of the communication satellite 131 for the other devices such as the communication device 2D. The communication satellite 131 directs communication radio waves at the communication device 2D inside the satellite communication cell 132 by beamforming to improve the quality of communication with the communication device 2D.

A size of the satellite communication cell 132 of the communication satellite 131 acting as a satellite base station can be set to any value depending on a number of beams emitted from the communication satellite 131. For instance, the satellite communication cell 132 with a diameter of approximately 24 km can be formed by combining a maximum of 2,800 beams. As illustrated, the satellite communication cell 132 is typically larger than the 5G cell 112, the 4G cell 122, and other terrestrial communication cells and can contain one or more 5G cells 112 or 4G cells 122 inside. The communication satellite 131, which flies in low earth orbit in outer space at an altitude of approximately 500 km to 700 km from the surface of the earth, is illustrated as a flying non-terrestrial base station in the description given above. However, a communication satellite that flies in higher earth orbit, such as a geostationary orbit, in outer space, or an unmanned or manned aircraft or a drone that flies in lower earth orbit in the earth's atmosphere such as the stratosphere (for example, at an altitude of approximately 20 km from the surface of the earth) may be used as a non-terrestrial base station in addition to or in place of the communication satellite 131.

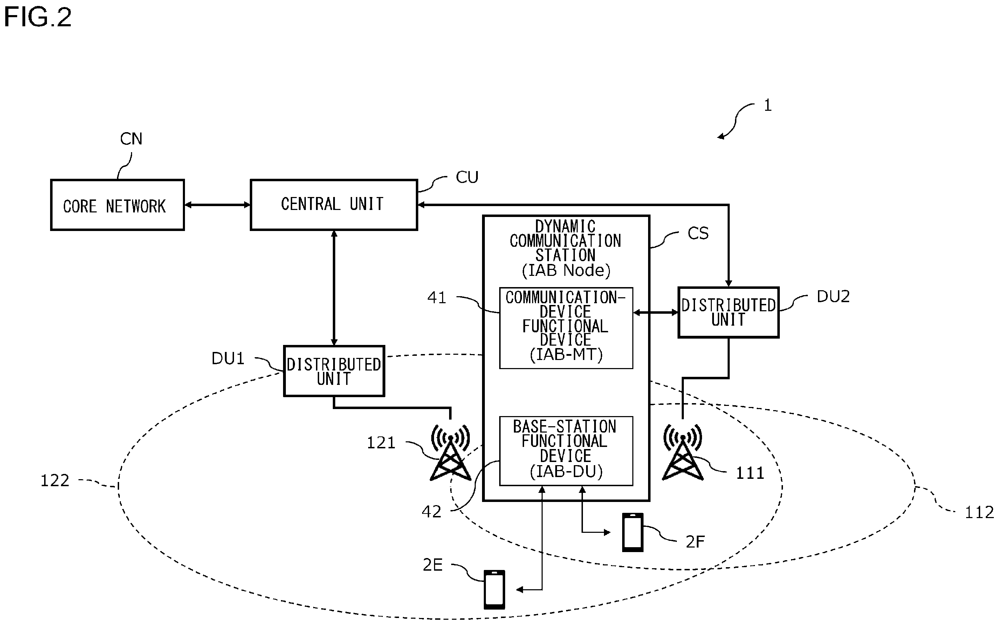

Fig. 2 schematically shows an overall configuration of the wireless communication system 1 to which a communication control apparatus according to an embodiment of the present disclosure is applied. As shown also in Fig. 1, the wireless communication system 1 is generally constructed of the terrestrial communication cells 112, 122 (hereinafter also referred to as fixed communication cells) provided by the terrestrial base stations 111, 121 (hereinafter also referred to as fixed base stations), which are installed permanently on the ground. Unfortunately, mobile communication is not possible outside fixed communication cells, and the quality of mobile communication goes down depending on time or place even inside any of the fixed communication cells. The wireless communication system 1 can include the satellite communication system 13 in which the communication satellite 131 acts as a non-terrestrial base station or a mobile base station. However, it is impractical to supplement the terrestrial network made of the terrestrial base stations 111, 121 only by the communication satellite 131.

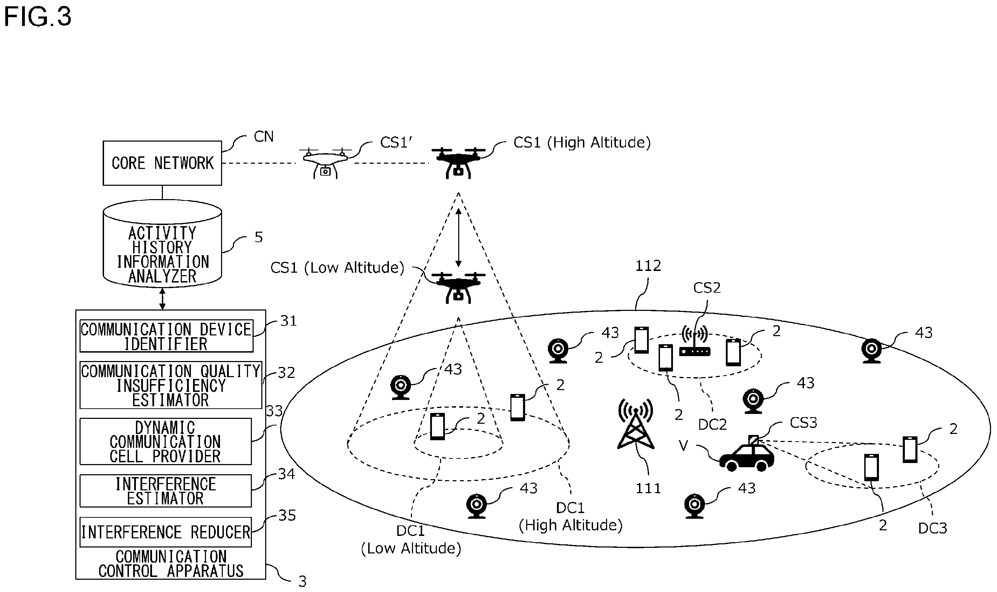

In order to resolve such an issue, as schematically shown in Fig. 2, it is preferable to introduce a dynamic communication station CS to supplement the fixed communication cells 112, 122 provided by the fixed base stations 111, 121. The dynamic communication station CS is, for example, a communication station designed to provide a dynamic communication cell that can change spatially or timewise. For instance, a moving or flying communication station as shown in Fig. 3 described later is an example of the dynamic communication station CS providing a dynamic communication cell that changes spatially (in other words, moves). A communication station switchable between an operation state in which a dynamic communication cell is provided and a suspension state in which the dynamic communication cell is not provided is an example of the dynamic communication station CS providing a dynamic communication cell that changes timewise (in other words, switches between on and off).

The dynamic communication station CS may be, for example, a communication station whose operating time is limited to a specific time period or an on-demand communication station that adaptively switches between an operation state and a suspension state in response to demand for communication from a communication device and the like. As described later, the on-demand communication station may be attached to a mobile object or a flying object, such as a drone, to move actively or passively to a place where demand for communication is high or a local place where communication quality is insufficient. Examples of the dynamic communication station CS include a mobile base station, such as the communication satellite 131, that functions as a base station (may be a fixed base station switchable between an operation state and a suspension state), a station like a repeater that communicates with the existing fixed base stations 111, 121 to expand the existing fixed communication cells 112, 122 (hereinafter also referred to as a relay station), and an integrated access and backhaul (IAB) node described later. The dynamic communication station CS is not limited to a movable communication station that uses 5G NR, LTE, LTE-Advanced, and other mobile communication RATs in a narrow sense but may be a non-mobile communication station that uses other RATs such as Bluetooth (trademark) or Wi-Fi (trademark). In such a way, when various dynamic communication stations CS use various RATs, coordination between the different RATs is provided by a radio access network (RAN) or a core network CN. In an example of Fig. 2, the dynamic communication station CS is an integrated access and backhaul (IAB) node.

IAB is a technology developed based on 5G and is a technology for expanding a communication cell provided by a parent node using a wireless backhaul between a base station that is an IAB donor (parent node) and an IAB node (child node) or between parent-child IAB nodes (an IAB node adjacent to the IAB donor being a parent node and an IAB node remote from the IAB donor being a child node). The "expansion of a communication cell" described herein not only includes expanding an area covered by an existing communication cell but also includes improving at least portion of communication quality of the existing communication cell. Further, the "expansion of an area covered by a communication cell" not only includes expanding an area of an existing communication cell along a horizontal plane but also includes expanding an existing communication cell in a vertical direction, for example, underground or to an upper level or a lower level of a building.

In Fig. 2, the dynamic communication station CS as an IAB node includes a communication-device functional device 41 and a base-station functional device 42. The communication-device functional device functions as a communication device to a parent node (a parent base station) including the fixed base stations 111, 121, whereas the base-station functional device functions as a child base station to the communication device UE to provide a dynamic communication cell. In 5G, the communication-device functional device 41 is specified as a mobile termination (MT) or an IAB-MT, and the base-station functional device 42 is specified as a distributed unit (DU) or an IAB-DU. In other wireless communication systems of future generations later than 5G, in addition to a central unit (CU) described later, functions similar to IAB, MT, DU, and CU are presumed to be provided in different names. In the present embodiment, such similar functions may be used as IAB, MT, DU, and CU.

In Fig. 2, the two fixed base stations 111, 121 are illustrated by example. The first fixed base station 121 as a 4G base station provides the first fixed communication cell 122 acting as a 4G cell, and the second fixed base station 111 as a 5G base station provides the second fixed communication cell 112 acting as a 5G cell. In the example of Fig. 2, baseband functions of the fixed base stations 111, 121 are each divided into a central unit (CU) on the core network CN side and a distributed unit (DU) on the communication device UE side. A first distributed unit DU1 of the first fixed base station 121 is disposed near a wireless apparatus, such as an antenna, at the first fixed base station 121, typically at a base station facility shared with the wireless apparatus. A second distributed unit DU2 of the second fixed base station 111 is disposed near a wireless apparatus, such as an antenna, at the second fixed base station 111, typically at a base station facility shared with the wireless apparatus. In the illustrated example, a central unit CU is used in common by the first fixed base station 121 (the first distributed unit DU1) and the second fixed base station 111 (the second distributed unit DU2). However, individual central units may be disposed for the respective fixed base stations 111, 121. The central unit CU is connected to the core network CN. Connection between the wireless apparatuses such as antennas at the fixed base stations 111, 121 and the respective distributed units DU1, DU2, connection between each of the distributed units DU1, DU2 and the central unit CU, and connection between the central unit CU and the core network CN are typically provided by wire such as conductors or optical fibers. However, any of the connection may be provided in portion or in whole by wireless.

The communication-device functional device 41 (IAB-MT) of the dynamic communication station CS can be wirelessly connected to the distributed unit DU of any of the fixed base stations 111, 121 in response to a position of the dynamic communication station CS. In the example of Fig. 2, the communication-device functional device 41 is wirelessly connected to the second distributed unit DU2 of the second fixed base station 111. The dynamic communication station CS in such a case functions as a child node, with the second fixed base station 111 acting as a parent node (parent base station) or an IAB donor, to expand the second fixed communication cell 112 provided by the second fixed base station 111 as the parent node. The base-station functional device 42 (IAB-DU) of the dynamic communication station CS provides the communication device UE with a dynamic communication cell (not illustrated) acting as an expanded communication cell of the second fixed communication cell 112 or a movable communication cell. The example of Fig. 2 schematically shows two communication devices 2E, 2F connected to the base-station functional device 42 of the dynamic communication station CS. The first communication device 2E, which is inside the first fixed communication cell 122 and outside the second fixed communication cell 112, essentially communicates with the second fixed base station 111 through the dynamic communication station CS. The second communication device 2F, which is inside an area where the first fixed communication cell 122 and the second fixed communication cell 112 overlap, essentially communicates with the second fixed base station 111 through the dynamic communication station CS. The dynamic communication station CS as an IAB node may expand a movable communication cell such as the satellite communication cell 132 with a mobile base station, such as the communication satellite 131, acting as a parent base station.

The dynamic communication station CS that is implemented, for instance, as a moving communication station (e.g., an IAB node) is attached to a mobile object unless the dynamic communication station can autonomously move (fly) like the communication satellite 131. The mobile object is any thing or person that can move, and examples of the mobile object include any vehicles such as automobiles, trains, motorcycles, bicycles, airplanes, drones, and ships. The moving dynamic communication station CS may be a communication device 2 carried by a moving person or a communication device 2 that has, for example, a tethering function or a personal hotspot function. Since such a communication device 2 (dynamic communication station CS) generally functions as a wireless LAN access point, the RAT (e.g., 5G NR) used by a base station acting as an expansion source (e.g., the second fixed base station 111) can differ from the RAT used by the dynamic communication station CS acting as an expansion destination.

Fig. 3 is a functional block diagram of a communication control apparatus 3 according to the present embodiment. The communication control apparatus 3 includes a communication device identifier 31, a communication quality insufficiency estimator 32, a dynamic communication cell provider 33, an interference estimator 34, and an interference reducer 35. The functional blocks can be partly omitted with proviso that the communication control apparatus 3 is designed to bring about at least portion of action or effect described hereinafter. The functional blocks are implemented by cooperation of hardware resources, such as a central processing unit, memory, an input device, and an output device of a computer and peripheral equipment connected to the computer, and software run by the resources. The computer may be of any type and may be installed at any place. The functional blocks may be implemented by hardware resources of a single computer or may be implemented by a combination of hardware resources distributed to a plurality of computers. In particular, in the present embodiment, a portion or all of the functional blocks of the communication control apparatus 3 may be centrally or distributively implemented by a computer or a processor provided for any of the communication device 2, the dynamic communication station CS (including a mobile object V), a sensor 43 described later, the base station (the distributed unit DU or the central unit CU), the gateway 133, and the core network CN.

In Fig. 3, three types of the dynamic communication stations CS are illustrated by example. A first dynamic communication station CS1 is a flying communication station (e.g., a base station, a relay station, an IAB node, and a non-mobile communication station) that is attached to a flying object such as a drone and is capable of flying. As described later, the first dynamic communication station CS1 is designed to be controlled spatially or timewise by the communication control apparatus 3. The communication control apparatus 3 spatially controls a position and an altitude of the first dynamic communication station CS1 that is for example a drone, a direction and a range in which a first dynamic communication cell DC1 is provided from the first dynamic communication station CS1, as well as a direction and a range in which beams used for provision of the first dynamic communication cell DC1 are radiated. The communication control apparatus 3 timewise controls switching between an operation state in which the first dynamic communication cell DC1 is provided by the first dynamic communication station CS1 and a suspension state in which the first dynamic communication cell DC1 is not provided. The first dynamic communication station CS1 may be controlled by the communication control apparatus 3 in any other aspect. For instance, intensity and a frequency band of the beams (communication radio waves) used for provision of the first dynamic communication cell DC1 may be controlled by the communication control apparatus 3.

In particular, regarding spatial control of the first dynamic communication station CS1, in response to a change in position of the first dynamic communication station CS1 on a horizontal plane by the communication control apparatus 3, a position of the first dynamic communication cell DC1 typically provided on the ground by the first dynamic communication station CS1 (typically two-dimensional coordinates on the ground) changes. In response to a change in altitude of the first dynamic communication station CS1 (a position in the vertical direction) by the communication control apparatus 3, a size of the first dynamic communication cell DC1 typically provided on the ground by the first dynamic communication station CS1 changes. As schematically shown in Fig. 3, when the altitude of the first dynamic communication station CS1 is low (illustrated with "Low Altitude"), the size of the first dynamic communication cell DC1 is smaller and a communication resource of the first dynamic communication station CS1 is concentrated on a narrower area. When the altitude of the first dynamic communication station CS1 is high (illustrated with "High Altitude"), the size of the first dynamic communication cell DC1 is larger and the communication resource of the first dynamic communication station CS1 is provided in a wider area.

However, as schematically shown in Fig. 3, the first dynamic communication cell DC1 provided by the first dynamic communication station CS1 is typically smaller than the existing communication cell, such as the 5G cell 112, provided by the existing base station such as the 5G base station 111. In such a way, the first dynamic communication cell DC1 is typically provided for a slight portion of the existing communication cell to make up for a local or temporal insufficient communication quality in the existing communication cell, as described later. When the first dynamic communication station CS1, which is for example a drone, is a communication station, such as a relay station or an IAB node, that needs a parent base station (not illustrated) and if the distance between the communication station and the parent base station is excessively large, a dynamic relay station CS1' that is another drone may be used to relay communication radio waves between the first dynamic communication station CS1 and the parent base station. For instance, when the communication control apparatus 3 causes the first dynamic communication station CS1 to move to a place remote from the parent base station, the communication control apparatus may also cause the dynamic relay station CS1' to move to a place midway between the first dynamic communication station CS1 and the parent base station. In such a way, the communication control apparatus 3 according to the present embodiment is designed to provide the dynamic communication cell to any place by enabling a plurality of dynamic communication stations or dynamic relay stations composed of, for example, a group of drones to be disposed at respective desired places and cooperate or communicate with each other.

A second dynamic communication station CS2 is an on-demand communication station (e.g., a base station, a relay station, an IAB node, and a non-mobile communication station) that is installed permanently or semipermanently on the ground. The second dynamic communication station CS2 is designed to be controlled spatially or timewise by the communication control apparatus **3.** The communication control apparatus 3 spatially controls a direction and a range in which a second dynamic communication cell DC2 is provided from the second dynamic communication station CS2, as well as a direction and a range in which beams used for provision of the second dynamic communication cell DC2 are radiated. The communication control apparatus 3 timewise controls switching between an operation state in which the second dynamic communication cell DC2 is provided by the second dynamic communication station CS2 and a suspension state in which the second dynamic communication cell DC2 is not provided. The second dynamic communication station CS2 may be controlled by the communication control apparatus 3 in any other aspect. For instance, intensity and a frequency band of the beams (communication radio waves) used for provision of the second dynamic communication cell DC2 may be controlled by the communication control apparatus **3.** As schematically shown in Fig. 3, the second dynamic communication cell DC2 provided by the second dynamic communication station CS2 is typically smaller than the existing communication cell, such as the 5G cell 112, provided by the existing base station such as the 5G base station 111. In such a way, the second dynamic communication cell DC2 is typically provided for a slight portion of the existing communication cell to make up for a local or temporal insufficient communication quality in the existing communication cell, as described later.

A third dynamic communication station CS3 is a communication station (e.g., a base station, a relay station, an IAB node, and a non-mobile communication station) that is attached to a vehicle V acting as a mobile object. The third dynamic communication station CS3 is designed to be controlled spatially or timewise by the communication control apparatus 3. The communication control apparatus 3 spatially controls a position and motion of the vehicle V to which the third dynamic communication station CS3 is attached, a direction and a range in which a third dynamic communication cell DC3 is provided from the third dynamic communication station CS3, as well as a direction and a range in which beams used for provision of the third dynamic communication cell DC3 are radiated. The communication control apparatus 3 timewise controls switching between an operation state in which the third dynamic communication cell DC3 is provided by the third dynamic communication station CS3 and a suspension state in which the third dynamic communication cell DC3 is not provided. The third dynamic communication station CS3 may be controlled by the communication control apparatus 3 in any other aspect. For instance, intensity and a frequency band of the beams (communication radio waves) used for provision of the third dynamic communication cell DC3 may be controlled by the communication control apparatus 3. As schematically shown in Fig. 3, the third dynamic communication cell DC3 provided by the third dynamic communication station CS3 is typically smaller than the existing communication cell, such as the 5G cell 112, provided by the existing base station such as the 5G base station 111. In such a way, the third dynamic communication cell DC3 is typically provided for a slight portion of the existing communication cell to make up for a local or temporal insufficient communication quality in the existing communication cell, as described later.

The communication device identifier 31 identifies the communication device 2 inside the existing communication cell. In Fig. 3, the 5G cell 112 provided by the 5G base station 111 is illustrated as the existing communication cell by example. However, the existing communication cell may be the 4G cell 122 or the satellite communication cell 132 provided by an existing base station such as the 4G base station 121 or the communication satellite 131. The communication device identifier 31 identifies, for example, one or more communication devices 2 being connected to or communicated with the 5G base station 111 acting as the existing base station, which provides the 5G cell 112 as the existing communication cell, based on connection- or communication-related information held by the RAN or the core network CN. By the communication device identifier 31, the position of each communication device 2 inside the 5G cell 112 may be measured with a module such as a GPS module mounted in the communication device 2, may be measured with a beacon or another position determination module (for example, may be implemented with the sensor 43 described later) used to determine the position of each communication device 2, or may be recognized based on positional information managed by a location management function (LMF) or various kinds of position-related information such as tracking area code (TAC) managed by a network such as the core network CN. By comparing such information on the position of each communication device 2 with information on the disposition of the existing communication cell 112 that is recognized in advance by the network such as the core network CN, the communication device identifier 31 may identify the communication device 2 inside the existing communication cell 112.

The communication quality insufficiency estimator 32 estimates an insufficient communication quality given by the existing communication cell 112 to each communication device 2. The insufficient communication quality described herein refers to a state in which the existing communication cell 112 is unable to deliver communication quality required for the communication each communication device 2 is to perform. For instance, when a specific communication device 2 being connected to the existing communication cell 112 is to perform high quality communication such as emergency communication or priority communication and then the existing communication cell 112 with an available communication resource is unable to deliver required high communication quality, an insufficient communication quality to the specific communication device 2 occurs. In such a way, the communication quality insufficiency estimator 32 may detect priority communication performed by the communication device 2 based on information such as network slice selection assistance information (NSSAI) and estimate the insufficient communication quality given by the existing communication cell 112 to the communication device 2. When an event such as a sudden increase in communication traffic volume, a deterioration of radio wave conditions, or a communications failure occurs at least in a partial area in the existing communication cell 112, an insufficient communication quality to each communication device 2 occurs at least in the area.

The communication quality insufficiency estimator 32 may estimate an insufficient communication quality given by the existing communication cell 112 to each communication device 2 based on a communication measurement result measured through a module such as the communication device 2, the existing base station 111, the dynamic communication stations CS1 to CS3, or the sensor 43. For instance, a standard communication device 2 measures communication quality or interference at a position of itself and provides a measurement result in channel state information (CSI), measurement report, or other format to the existing base station 111 or others. The communication measurement result measured through such a communication device 2 may contain average Reference Signal Received Power (RSRP), Reference Signal Received Quality (RSRQ), Channel Quality Indicator (CQI), or average reception throughput. The communication quality insufficiency estimator 32 may apply a predetermined threshold value to a communication measurement result of such a device to determine an insufficient communication quality.

The communication quality insufficiency estimator 32 may estimate communication quality in each area in the existing communication cell 112 based on a record of communication with a module such as each communication device 2, the dynamic communication stations CS1 to CS3, and each sensor 43. Such a record is collected by the existing base station 111. The dynamic communication stations CS1 to CS3 may provide a communication measurement result, which is similar to that of the standard communication device 2, to the communication quality insufficiency estimator 32. In particular, when the dynamic communication stations CS1 to CS3 are each composed of an IAB node (Fig. 2), the communication-device functional device 41 (IAB-MT) of the dynamic communication station functions as the communication device 2 and thus can readily provide a communication measurement result similar to that of the communication device 2.

The sensor 43 measures any information that contributes to estimation of an insufficient communication quality given by the existing communication cell 112 to each communication device 2. Basic information such as a position of the sensor 43 and a measurement zone covered by the sensor is set or recognized by the core network CN or another. A shape of the measurement zone covered by the sensor 43 is any. Examples of the shape include a concentric circle centered on the sensor 43, a fan shape centered on the sensor 43, a substantially rectangular shape extending from the sensor 43 at one end to another end, any convex hull containing all the communication devices 2 or all points that are to be measured by the sensor 43, and any three-dimensional shape that has a height added to the two-dimensional shape of any type above.

In a similar way to the standard communication device 2, the sensor 43 may directly or indirectly measure communication quality or interference at a position of itself. The sensor 43 may measure a number of the communication devices 2 or a status of movement of such devices inside the measurement zone. When the number of the measured communication devices 2 is large, the communication resource of the existing communication cell 112 gets strained in the measurement zone and as a result, it is highly likely that an insufficient communication quality occurs. When the measured communication devices 2 are moving at high speeds, the communication quality from the existing base station 111 acting as a fixed base station typically decreases and as a result, it is highly likely that an insufficiency of the communication quality to the communication devices 2 occurs. Further, a large number of the sensors 43 (which may be the communication device 2 or the dynamic communication station CS that each has a function of the sensor 43) placed in areas inside the existing communication cell 112 measure positions of a large number of the communication devices 2 or a status of the movement of the devices inside the existing communication cell 112, and this enables the communication quality insufficiency estimator 32 to estimate a distribution or a density of the communication devices 2 inside the existing communication cell 112 at a present time or a future time. The communication resource of the existing communication cell 112 gets strained in a zone over which a large number of the communication devices 2 are distributed and as a result, it is highly likely that an insufficient communication quality occurs. The core network CN or another may keep track of time for which each communication device 2 is within range of the existing communication cell 112, and the communication quality insufficiency estimator 32 may refer to the time to keep track of such dynamic behavior of the large number of the communication devices 2 inside the existing communication cell 112.

The sensor 43 may be, for example, an instrument mounted in the communication device 2 such as a smartphone and the existing base station 111, and may be an instrument like an IoT device that has a communication function barely enough to share measurement results with the RAN or the core network CN in which the existing base station 111 is included. Using Bluetooth (trademark) or another near field communication technology, such a sensor 43 may provide a communication measurement result to a nearby module such as the communication device 2, the dynamic communication stations CS1 to CS3, the vehicle V, or the existing base station 111 and cause the module to relay or provide the communication measurement result to the RAN or the core network CN as needed.

The sensor 43 may be a passive drive type IoT sensor, which is also referred to as an ambient IoT or passive IoT device. Such an IoT sensor performs measurement action in response to a trigger given from the network side. Electricity for performing the measurement action may be given to the IoT sensor through radio waves carrying the trigger from the network side. A method similar to Minimization of Drive Test (MDT) specified by 3GPP may be used to collect the communication measurement result, as described above, through the module such as the communication device 2, the existing base station 111, the dynamic communication stations CS1 to CS3, or the sensor 43.

An activity history information analyzer 5 is implemented by an artificial intelligence/machine learning (AI/ML) function including a network data analytics function (NWDAF) introduced in 5GC, which acts as the 5G core network CN. Using the activity history information analyzer, the communication quality insufficiency estimator 32 may estimate an insufficient communication quality to each communication device 2 being connected to the existing communication cell 112, with various kinds of the communication measurement results as described above being comprehensively taken into consideration. The NWDAF is responsible for collection and analysis of data over the 5G-included network. Specifically, the NWDAF collects and stores activity history information regarding various activities performed on the network by the large number of the communication devices 2, the existing base station 111, the dynamic communication stations CS1 to CS3, the sensors 43, and other modules connected to the network and, for example, uses results of the analyzed activities to control traffic on the network. In other wireless communication systems including wireless communication systems of future generations later than 5G, a function similar to the NWDAF is presumed to be provided in a different name. In the present embodiment, such a similar function may be used in place of or in addition to the NWDAF. To enable the activity history information analyzer 5 to make proper analysis, time information, such as a time stamp representing a time of collection, is added to various kinds of the communication measurement results collected through the communication devices 2, the existing base station 111, the dynamic communication stations CS1 to CS3, the sensors 43, and other modules.

As described above, the communication quality insufficiency estimator 32 is able to individually estimate whether or not an insufficient communication quality to each communication device 2 inside the existing communication cell 112 occurs, based on present or past communication measurement results of various kinds collected through the communication devices 2, the existing base station 111, the dynamic communication stations CS1 to CS3, the sensors 43, and other modules, as well as comprehensive analysis the activity history information analyzer 5 makes of a massive amount of the communication measurement results (which may also be referred to as big data). Alternatively, the communication quality insufficiency estimator 32 is able to estimate a local or temporal insufficient communication quality in each area inside the existing communication cell 112 or in each time period. For instance, when an analysis of past communication measurement results of various kinds collected through the communication devices 2, the existing base station 111, the dynamic communication stations CS1 to CS3, the sensors 43, and other modules has revealed that an insufficient communication quality occurs with high frequency in a specific area inside the existing communication cell 112 in a specific time period, the communication quality insufficiency estimator 32 is able to estimate that there is a high possibility that an insufficient communication quality also occurs in the area in the time period in the future. In such a case, the dynamic communication cell provider 33 described later sends out, for example, the first dynamic communication station CS1 (drone) to the area before the time period and thereby effectively deploys the first dynamic communication cell DC1 to make up for an insufficient communication quality given by the existing communication cell 112. On such an occasion, the altitude of the first dynamic communication station CS1 (drone) and the direction and the range in which beams are radiated are adjusted such that the first dynamic communication cell DC1 is formed to cover all the area.

The dynamic communication cell provider 33 causes the dynamic communication station CS1 to CS3 to provide the dynamic communication cell DC1 to DC3 for each communication device 2 to which an insufficient communication quality given by the existing communication cell 112 is estimated by the communication quality insufficiency estimator 32.

Regarding a mobile dynamic communication station CS such as the first dynamic communication station CS1 or the third dynamic communication station CS3, the dynamic communication cell provider 33 may move the first or third dynamic communication station CS1 or CS3 to a place at which the first dynamic communication cell DC1 or the third dynamic communication cell DC3 can be provided for the communication device 2 in accordance with an estimation of an insufficient communication quality made by the communication quality insufficiency estimator 32. In particular, regarding the first dynamic communication station CS1 capable of flying, the dynamic communication cell provider 33 may change the altitude of the first dynamic communication station CS1 to change the size of the first dynamic communication cell DC1. In such a case, it is preferable to set the altitude of the first dynamic communication station CS1 as low as possible so long as the first dynamic communication cell DC1 is formed so as to cover all of one or more communication devices 2 to which an insufficient communication quality is estimated. This makes the size of the first dynamic communication cell DC1 small, and the communication resource of the first dynamic communication station CS1 is intensively provided for one or more communication devices 2 that need such resource. When the mobile dynamic communication station CS is remote from a place at which the dynamic communication cell DC is to be provided (where the communication device 2 to which an insufficient communication quality is estimated is present), the dynamic communication cell provider 33 may give a movement command to the dynamic communication station CS only if the dynamic communication station CS can practically move to the place by a time at which provision of the dynamic communication cell DC is to be started (a time at which the insufficient communication quality is expected to occur).

Regarding a substantially immobile dynamic communication station CS such as the second dynamic communication station CS2 or the third dynamic communication station CS3 (a case in which smooth movement is not possible due to a traffic jam or the like), in order to provide the second dynamic communication cell DC2 or the third dynamic communication cell DC3 for the communication device 2, the dynamic communication cell provider 33 may adjust the direction and the range in which either of the dynamic communication cells DC is provided or the direction and the range in which beams used for provision of either of the dynamic communication cells DC are radiated, in accordance with an estimation of an insufficient communication quality made by the communication quality insufficiency estimator 32. If the communication device 2 to which an insufficient communication quality given by the existing communication cell 112 is estimated is not present near the substantially immobile dynamic communication station CS, the same station may be maintained in the suspension state, in which the dynamic communication cell DC is not provided. On the other hand, when the communication device 2 to which an insufficient communication quality given by the existing communication cell 112 is estimated appears near the dynamic communication station CS, the dynamic communication cell provider 33 may switch the dynamic communication station CS to the operation state to provide the dynamic communication cell DC for the communication device 2.

When the insufficient communication quality estimated by the communication quality insufficiency estimator 32 is resolved, the dynamic communication cell provider 33 causes the dynamic communication station CS to stop providing the dynamic communication cell DC for each communication device 2. Typically, the dynamic communication cell provider 33 switches the dynamic communication station CS from the operation state to the suspension state. Regarding the mobile dynamic communication station CS such as the first dynamic communication station CS1 or the third dynamic communication station CS3, when the insufficient communication quality estimated by the communication quality insufficiency estimator 32 is resolved, the dynamic communication cell provider 33 may move the dynamic communication station CS from the place at which the dynamic communication cell DC is provided for each communication device 2. When a plurality of the dynamic communication stations CS such as the first dynamic communication station CS1 and the dynamic relay station CS1' are involved in the provision of the dynamic communication cell DC1 (which may also be referred to as multihop), a delay occurs in communication between the dynamic communication stations CS. Hence, when the dynamic communication cell provider 33 switches the dynamic communication stations CS between the operation state and the suspension state, switching is preferably performed with advance timing in consideration of the delay in communication between the dynamic communication stations CS.

The interference estimator 34 estimates interference between the dynamic communication cell DC provided by the dynamic communication station CS and the existing communication cell 112 around the dynamic communication station CS. For instance, when the dynamic communication station CS in the operation state approaches the existing communication cell 112, communication radio waves of the dynamic communication cell DC being deployed by the dynamic communication station CS can interfere with communication radio waves of the existing communication cell 112. When the dynamic communication station CS switches from the suspension state to the operation state inside the existing communication cell 112, communication radio waves of the dynamic communication cell DC the dynamic communication station CS starts deploying can interfere with communication radio waves of the existing communication cell 112. The interference estimator 34 may detect traffic volume or communication electricity of at least one of the dynamic communication cell DC and the existing communication cell 112 and if such volume is noticeably low, may determine that the possibility of occurrence of interference in actual communication is low even if both of the communication cells overlap.

If the dynamic communication cell DC provided by the dynamic communication station CS interferes with the existing communication cell 112 In such a way, the communication quality in an area in which the dynamic communication cell interferes with or overlaps the existing communication cell 112 deteriorates despite additional provision of the dynamic communication cell DC. To avoid such a situation, the interference estimator 34 estimates at least one of interference occurring between the dynamic communication cell DC and the existing communication cell 112 at the present time, interference that can occur at the future time in response to an approach made by the dynamic communication cell DC being deployed to the existing communication cell 112, and interference that can occur between the dynamic communication cell DC and the existing communication cell 112 at the future time when the dynamic communication station CS switching from the suspension state to the operation state starts deploying the dynamic communication cell.

The interference estimator 34 may estimate interference between the dynamic communication cell DC and the existing communication cell 112 based on a communication measurement result measured through the dynamic communication station CS primarily at the present time. The dynamic communication station CS in such a case is interpreted as a station that includes (incorporates) the sensor 43, which is designed to directly or indirectly measure communication quality or interference. In particular, as described above with reference to Fig. 2, when the dynamic communication station CS is composed of an IAB node, the communication-device functional device 41 (IAB-MT), which has a function for communication measurement similar to that of a commonly-used communication device 2 such as a smartphone, can be used as the sensor 43 or the interference estimator 34. Specifically, in a similar way to the commonly-used communication device 2, the communication-device functional device 41 (IAB-MT) measures communication quality or interference at a position of itself (the dynamic communication station CS) and provides a measurement result in channel state information (CSI) or other format to the parent base station. If there is interference between the dynamic communication cell DC and the existing communication cell 112, the communication result that is measured by the communication-device functional device 41 (IAB-MT) and provided in CSI or other format to the parent base station includes a suggestion such as "low communication quality (due to interference)" or "there is interference".

The interference estimator 34 may estimate interference between the dynamic communication cell DC and the existing communication cell 112 based on a communication measurement result measured through the sensor 43 around the dynamic communication station CS primarily at the present time. The sensor 43 in such a case is designed to directly or indirectly measure communication quality or interference. As described above, the sensor 43 such as an IoT device that has a barely enough communication function provides a communication measurement result to the RAN or the core network CN.

The interference estimator 34 may estimate or predict interference that can occur between the dynamic communication cell DC and the existing communication cell 112 at the future time, based on activity history information analyzed by the activity history information analyzer 5. Specifically, the activity history information analyzer 5 collects past communication results measured through at least one of the dynamic communication station CS subject to interference estimation, another dynamic communication station CS, and one or more sensors 43 and analyzes the results as activity history information.

For instance, communication measurement results were collected by the activity history information analyzer 5 when the dynamic communication cell DC was deployed in a specific area inside the existing communication cell 112 by the dynamic communication station CS subject to interference estimation or another dynamic communication station CS in the past, and the collected results are extremely useful in estimating interference that can occur at the future time. Specifically, if a communication measurement result of "there is interference" was obtained when the dynamic communication station CS subject to interference estimation or another dynamic communication station CS deployed the dynamic communication cell DC in a certain mode to a specific area inside the existing communication cell 112 in the past, there is a high possibility that in response to the deployment of the dynamic communication cell DC in a similar mode in a similar situation by the dynamic communication station CS subject to interference estimation, interference with the existing communication cell 112 will occur. Hence, the interference reducer 35 described later is able to prevent interference between the dynamic communication cell DC and the existing communication cell 112 from occurring by performing an action for interference reduction, such as preventing the dynamic communication station CS from deploying the dynamic communication cell DC in the mode, causing the dynamic communication station CS to deploy the dynamic communication cell DC in a mode different from the mode, or changing a mode of deploying the existing communication cell 112.

The interference reducer 35 performs the action for interference reduction on at least one of the dynamic communication cell DC and the existing communication cell 112 to reduce the interference, which is estimated by the interference estimator 34, between the dynamic communication cell DC and the existing communication cell 112 at the present time or the future time.

The action for interference reduction may include at least one of making a change in at least one of the directions in which the dynamic communication cell DC and the existing communication cell 112 are provided respectively (for example, adjusting the direction and the range in which the dynamic communication cell DC is provided to reduce interference with the existing communication cell 112), changing the beams used (for example, adjusting the direction and the range in which the beams for at least one of the communication cells are radiated and adjusting intensity or other properties of the beams to prevent high intensity beams for both of the communication cells from being radiated to the same place or area), changing the antennas used (for example, switching at least portion of the antennas responsible for irradiating the interference area with the beams to the suspension state), changing a frequency band used (for example, causing both of the communication cells to mainly use different frequency bands at least in the interference area), and applying various kinds of known control for inter-cell interference, which is also referred to as inter-cell interference coordination (ICIC).

The interference reducer 35 may perform the action for interference reduction that is at least one of disconnecting at least portion of the communication devices 2 connected to at least one of the dynamic communication cell DC and the existing communication cell 112, switching at least portion of one of the dynamic communication cell DC and the existing communication cell 112 to the suspension state (by this, the area where both of the communication cells interfere with each other is reduced or an amount of interference in the interference area is reduced), and transferring at least portion of the communication devices connected to one of the dynamic communication cell DC and the existing communication cell 112 to the other communication cell through a process such as handover or redirection (in addition to this, it is preferable to reduce intensity with which the one communication cell is provided and thereby hinder the one communication cell from interfering with the other communication cell).

As described above, the interference reducer 35 may perform the action for interference reduction on any of the dynamic communication cell DC (the dynamic communication station CS) and the existing communication cell 112 (the existing base station 111). However, it is preferred that the action is performed on the dynamic communication cell DC, which is generally smaller than the existing communication cell 112 and is thus more locally and flexibly adaptable (in other words, more agile). As shown in Fig. 2, when the dynamic communication station CS is composed of an IAB node, the base-station functional device 42 (IAB-DU), which functions as a (child) base station and provides the dynamic communication cell DC, performs a main portion of the action for interference reduction.

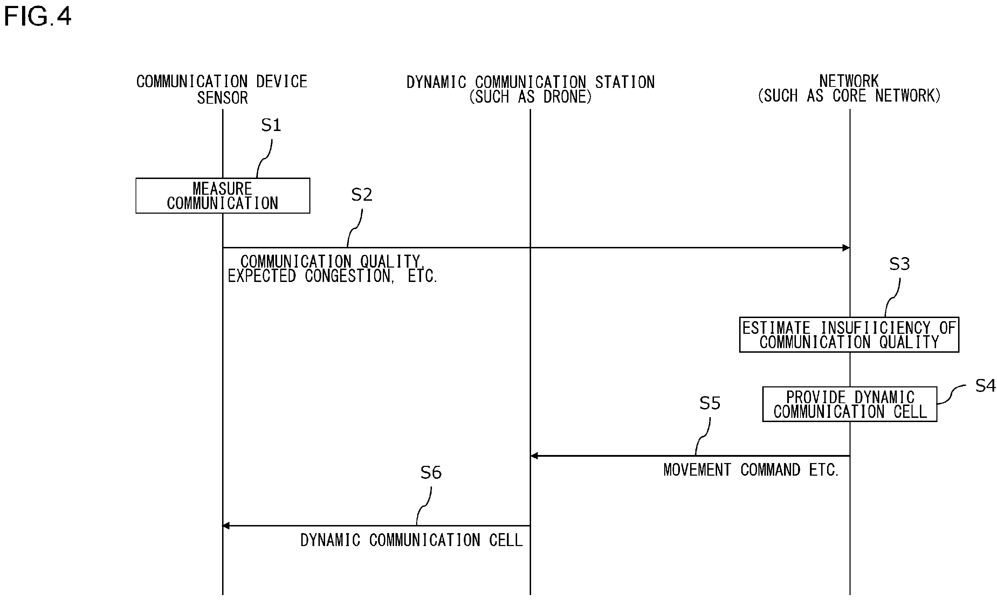

Fig. 4 is an example of a flowchart showing communication control executed by the communication control apparatus 3 according to the present embodiment. In the drawing, "S" represents a step or a process. In S1, the module, such as the communication device 2 and the sensor 43, responsible for portion of a process executed by the communication quality insufficiency estimator 32 performs various kinds of communication measurement. Communication measurement results acquired in S1 may be used for a succeeding process in S2 to S6 in real time or may be analyzed by the activity history information analyzer 5 for the process in S2 to S6 in the future. In S2, the communication measurement results collected by the module, such as the communication device 2 and the sensor 43, in S1 are sent to the network such as the core network CN. The communication measurement results sent in S2 may include at least portion of present or future communication quality and expected congestion in each area inside the existing communication cell 112, which is to be estimated in following S3. The expected congestion described herein may be, for example, an expected or predicted number of the communication devices 2 that send the network a report regarding a failure to meet required communication quality. If the expected number of such communication devices 2 is greater than or equal to a predetermined threshold and such a state is expected to be continued for a predetermined time or more, an insufficient communication quality may be estimated in following S3.

In S3, based on various kinds of the communication measurement results collected in S1 and provided in S2, the communication quality insufficiency estimator 32 estimates an insufficient communication quality given by the existing communication cell 112 to each communication device 2. In S4, the dynamic communication cell provider 33 causes the dynamic communication station CS to provide the dynamic communication cell DC for each communication device 2 to which an insufficient communication quality is estimated in S3. In S5, the dynamic communication cell provider 33 moves the mobile dynamic communication station CS, such as a drone, (for example, the first dynamic communication station CS1 in Fig. 3) to the position of the communication device 2 that is assessed as being required to be provided with the dynamic communication cell DC in S4. If a congestion area where the expected congestion is greater than or equal to the predetermined threshold is identified in S3, the dynamic communication station CS may be moved to over a center of the congestion area or may be moved to over any end of the congestion area (the dynamic communication station CS emits beams from the end to another end). If it is difficult to satisfactorily cover one congestion area with a single dynamic communication station CS, parts of the congestion area may be covered with a plurality of the dynamic communication stations CS. In S6, the dynamic communication station CS, such as a drone, that is moved to a predetermined place and a predetermined altitude in S5 provides the dynamic communication cell DC for the communication device 2 to which an insufficient communication quality is estimated in S3.

According to the present embodiment, the communication quality insufficiency estimator 32 estimates an insufficient communication quality to a communication device 2 inside the existing communication cell 112 and in response to such an estimation, the dynamic communication cell provider 33 enables the dynamic communication station CS to provide the dynamic communication cell DC for the communication device 2.

The present disclosure has been described above based on the embodiment. The embodiment is intended to be illustrative only, and the person of ordinary skill in the art will understand that various modified examples are possible for the combination of configuration elements and processing steps in the embodiment and that such modifications are also within the scope of the present disclosure.

The configurations, action and functions of each device and method described in the embodiment can be implemented by hardware resources, software resources or cooperation of hardware and software resources. Available hardware resources, for example, include processors, readonly memory (ROM), random-access memory (RAM), and various integrated circuits. Available software resources, for example, include operating systems, applications, and other programs.

The present disclosure may be represented as in the following items.

### Item 1:

A communication control apparatus including at least one processor to execute:
identifying, by a communication device identifier, a communication device inside an existing communication cell;
estimating, by a communication quality insufficiency estimator, an insufficient communication quality given by the existing communication cell to the communication device; and
causing, by a dynamic communication cell provider, a dynamic communication station to provide a dynamic communication cell for the communication device inside the existing communication cell.

### Item 2:

The communication control apparatus according to item 1, wherein the dynamic communication cell provider moves the dynamic communication station to a place at which the dynamic communication cell can be provided for the communication device in accordance with an estimation of an insufficient communication quality made by the communication quality insufficiency estimator.

### Item 3:

The communication control apparatus according to either item 1 or **2,** wherein, when the insufficient communication quality estimated by the communication quality insufficiency estimator is resolved, the dynamic communication cell provider causes the dynamic communication station to stop providing the dynamic communication cell for the communication device.

### Item 4:

The communication control apparatus according to item **3,** wherein, when the insufficient communication quality estimated by the communication quality insufficiency estimator is resolved, the dynamic communication cell provider moves the dynamic communication station from a place at which the dynamic communication cell can be provided for the communication device.

### Item 5:

The communication control apparatus according to any one of items 1 to 4, wherein the dynamic communication station is switchable between an operation state in which the dynamic communication cell is provided and a suspension state in which the dynamic communication cell is not provided.

### Item 6:

The communication control apparatus according to any one of items 1 to 5, wherein the dynamic communication station is a movable communication station, and
the dynamic communication cell is a movable communication cell.

### Item 7:

The communication control apparatus according to item 6, wherein
the dynamic communication station is a flying communication station capable of flying; and
the dynamic communication cell provider changes an altitude of the flying communication station to change a size of the dynamic communication cell.

### Item 8:

The communication control apparatus according to any one of items 1 to 7, wherein the dynamic communication station is at least one of a base station, an integrated access and backhaul (IAB) node, a relay station, and a non-mobile communication station.

### Item 9:

The communication control apparatus according to any one of items 1 to 8, wherein the communication quality insufficiency estimator estimates an insufficient communication quality given by the existing communication cell to the communication device based on a communication measurement result measured through a sensor around the communication device.

### Item 10:

The communication control apparatus according to any one of items 1 to 9, wherein the communication quality insufficiency estimator estimates an insufficient communication quality given by the existing communication cell to the communication device based on a communication measurement result measured through the communication device.

### Item 11:

The communication control apparatus according to any one of items 1 to 10, wherein the communication quality insufficiency estimator estimates an insufficient communication quality given by the existing communication cell to the communication device based on detection of priority communication performed by the communication device.

### Item 12:

The communication control apparatus according to any one of items 1 to 11, wherein the at least one processor executes:
estimating, by an interference estimator, interference between the dynamic communication cell and the existing communication cell; and
performing, by an interference reducer, an action for interference reduction on at least one of the dynamic communication cell and the existing communication cell to reduce the interference between the dynamic communication cell and the existing communication cell.

### Item 13:

The communication control apparatus according to item 12, wherein the interference estimator estimates interference between the dynamic communication cell and the existing communication cell based on a communication measurement result measured through the dynamic communication station.

### Item 14:

The communication control apparatus according to either item 12 or 13, wherein the interference estimator estimates interference between the dynamic communication cell and the existing communication cell based on a communication measurement result measured through a sensor around the dynamic communication station.

### Item 15:

The communication control apparatus according to any one of items 12 to 14, wherein the action for interference reduction includes at least one of: changing direction of providing; changing a beam used; changing an antenna used; changing a frequency band used; and applying inter-cell interference coordination (ICIC), in at least one of the dynamic communication cell and the existing communication cell.

### Item 16:

The communication control apparatus according to any one of items 12 to 15, wherein the interference reducer performs the action for interference reduction on the dynamic communication cell.

### Item 17:

A communication control method including:
identifying a communication device inside an existing communication cell;
estimating an insufficient communication quality given by the existing communication cell to the communication device; and
causing a dynamic communication station to provide a dynamic communication cell for the communication device inside the existing communication cell.

### Item 18:

A storage medium storing a communication control program to cause a computer to execute:
identifying a communication device inside an existing communication cell;
estimating an insufficient communication quality given by the existing communication cell to the communication device; and
causing a dynamic communication station to provide a dynamic communication cell for the communication device inside the existing communication cell.

### [INDUSTRIAL APPLICABILITY]

The present disclosure relates to provision of a dynamic communication cell in accordance with an insufficient communication quality.

### [REFERENCE SIGNS LIST]

1 wireless communication system, 2 communication device, 3 communication control apparatus, 11 5G wireless communication system, 12 4G wireless communication system, 13 satellite communication system, 31 communication device identifier, 32 communication quality insufficiency estimator, 33 dynamic communication cell provider, 34 interference estimator, 35 interference reducer, 41 communication-device functional device, 42 base-station functional device, 43 sensor, 111 5G base station, 112 5G cell, 121 4G base station, 122 4G cell, 131 communication satellite, 132 satellite communication cell, 133 gateway

## Claims

1. A communication control apparatus comprising at least one processor to execute:
identifying, by a communication device identifier, a communication device inside an existing communication cell;
estimating, by a communication quality insufficiency estimator, an insufficient communication quality given by the existing communication cell to the communication device; and
causing, by a dynamic communication cell provider, a dynamic communication station to provide a dynamic communication cell for the communication device inside the existing communication cell.

2. The communication control apparatus according to claim 1, wherein the dynamic communication cell provider moves the dynamic communication station to a place at which the dynamic communication cell can be provided for the communication device in accordance with an estimation of an insufficient communication quality made by the communication quality insufficiency estimator.

3. The communication control apparatus according to claim 1, wherein, when the insufficient communication quality estimated by the communication quality insufficiency estimator is resolved, the dynamic communication cell provider causes the dynamic communication station to stop providing the dynamic communication cell for the communication device.

4. The communication control apparatus according to claim 3, wherein, when the insufficient communication quality estimated by the communication quality insufficiency estimator is resolved, the dynamic communication cell provider moves the dynamic communication station from a place at which the dynamic communication cell can be provided for the communication device.

5. The communication control apparatus according to claim 1, wherein the dynamic communication station is switchable between an operation state in which the dynamic communication cell is provided and a suspension state in which the dynamic communication cell is not provided.

6. The communication control apparatus according to claim 1, wherein
the dynamic communication station is a movable communication station, and
the dynamic communication cell is a movable communication cell.

7. The communication control apparatus according to claim 6, wherein
the dynamic communication station is a flying communication station capable of flying, and
the dynamic communication cell provider changes an altitude of the flying communication station to change a size of the dynamic communication cell.

8. The communication control apparatus according to claim 1, wherein the dynamic communication station is at least one of a base station, an integrated access and backhaul (IAB) node, a relay station, and a non-mobile communication station.

9. The communication control apparatus according to claim 1, wherein the communication quality insufficiency estimator estimates an insufficient communication quality given by the existing communication cell to the communication device based on a communication measurement result measured through a sensor around the communication device.

10. The communication control apparatus according to claim 1, wherein the communication quality insufficiency estimator estimates an insufficient communication quality given by the existing communication cell to the communication device based on a communication measurement result measured through the communication device.

11. The communication control apparatus according to claim 1, wherein the communication quality insufficiency estimator estimates an insufficient communication quality given by the existing communication cell to the communication device based on detection of priority communication performed by the communication device.

12. The communication control apparatus according to claim 1, wherein the at least one processor executes:
estimating, by an interference estimator, interference between the dynamic communication cell and the existing communication cell; and
performing, by an interference reducer, an action for interference reduction on at least one of the dynamic communication cell and the existing communication cell to reduce the interference between the dynamic communication cell and the existing communication cell.

13. The communication control apparatus according to claim 12, wherein the interference estimator estimates interference between the dynamic communication cell and the existing communication cell based on a communication measurement result measured through the dynamic communication station.

14. The communication control apparatus according to claim 12, wherein the interference estimator estimates interference between the dynamic communication cell and the existing communication cell based on a communication measurement result measured through a sensor around the dynamic communication station.

15. The communication control apparatus according to claim 12, wherein the action for interference reduction includes at least one of: changing direction of providing; changing a beam used; changing an antenna used; changing a frequency band used; and applying inter-cell interference coordination (ICIC), in at least one of the dynamic communication cell and the existing communication cell.

16. The communication control apparatus according to claim 12, wherein the interference reducer performs the action for interference reduction on the dynamic communication cell.

17. A communication control method comprising:
identifying a communication device inside an existing communication cell;
estimating an insufficient communication quality given by the existing communication cell to the communication device; and
causing a dynamic communication station to provide a dynamic communication cell for the communication device inside the existing communication cell.

18. A storage medium storing a communication control program to cause a computer to execute:
identifying a communication device inside an existing communication cell;
estimating an insufficient communication quality given by the existing communication cell to the communication device; and
causing a dynamic communication station to provide a dynamic communication cell for the communication device inside the existing communication cell.
